# EUROPEAN PATENT APPLICATION

(11) **EP 4 650 708 A1**
(43) Date of publication of application: **19.11.2025**
(21) Application number: 24839941.2
(22) Date of filing: 25.06.2024
(51) Int. Cl.: G01B 11/14, G01B 11/04, G06T 7/70, G08B 21/18

(54) **SEALING TOOL INSPECTION DEVICE AND BATTERY CELL SEALING SYSTEM INCLUDING SAME**

(30) Priority: 07.07.2023 KR 20230088568
(71) Applicant: LG Energy Solution, Ltd., Seoul 07335 (KR)
(72) Inventor: RA, Young-Min, Daejeon 34122 (KR); YOON, Seog-Jin, Daejeon 34122 (KR); LEE, Gi-Taek, Daejeon 34122 (KR); LEE, Eung-Hyun, Daejeon 34122 (KR); HONG, Seok-In, Daejeon 34122 (KR)
(74) Representative: Goddar, Heinz J.
(86) International application number: PCT/KR2024/008793
(87) International publication number: WO 2025/014127

(57) **Abstract**

A sealing tool inspection device according to an embodiment of the present disclosure inspects a pair of sealing tools that contact a sealing target portion of a battery cell at opposite sides with the sealing target portion being interposed therebetween and seal the sealing target portion. The sealing tool inspection device includes a camera configured to photograph the pair of sealing tools in contact with the sealing target portion and generate an image showing a gap between the pair of sealing tools; and a processor configured to generate first information about at least one of a spacing between the pair of sealing tools and a posture of the pair of sealing tools, based on a spacing of the gap shown in the image.

## Description

### TECHNICAL FIELD

The present application claims priority to Korean Patent Application No. 10-2023-0088568 filed on July 7, 2023 in the Republic of Korea, the disclosures of which are incorporated herein by reference.

The present disclosure relates to a sealing tool inspection device and a battery cell sealing system including the same, and more specifically, to a sealing tool inspection device that inspects sealing tools configured to seal a case of a battery cell, and a battery cell sealing system including the same.

### BACKGROUND ART

In general, secondary batteries indicate batteries capable of being repeatedly charged and discharged, such as lithium-ion batteries, lithium-polymer batteries, nickelcadmium batteries, nickel-hydrogen batteries, nickel-zinc batteries, and the like. A battery cell, which is the most basic secondary battery, may provide an output voltage of approximately 2.5V to 4.2V.

Recently, as these secondary batteries have been applied to devices that require high output voltage and large charging capacity, such as electric vehicles or ESS (Energy Storage Systems), battery modules constructed by connecting a plurality of battery cells in series, in parallel, or in a combination thereof, and battery packs constructed by connecting the battery modules in series, in parallel, or in a combination thereof, are widely used.

In this way, the battery cell included in a battery module or battery pack may be manufactured through a process of accommodating an electrode assembly including a current collector and an electrolyte material in a case of the battery cell and then sealing the corresponding case. In this case, the sealing quality of the battery cell may be determined depending on the state of the sealing tools that seal the case of the battery cell by pressurizing/heating.

However, the existing technology indirectly checks the state of the sealing tools by periodically sampling some of the battery cells that have completed the sealing process and checking the thickness of the sealing portion of the sampled battery cell through a contact-type measuring device such as a micrometer. Thus, the existing technology requires a lot of time and money to inspect the sealing tools, and the defect rate of battery cells increases due to inspection delays, which reduces battery manufacturing efficiency.

In addition, if the state of the sealing tools is directly inspected through a contact-type measuring device such as a micrometer, a lot of time and cost are required to cool the sealing tools heated to a high temperature of about 250°C during the sealing process and then reheat the cooled sealing tools after inspection. Also, there is a problem in that measurement errors occur due to thermal expansion of the measurement target and the measurement device in a high temperature environment.

### DISCLOSURE

### Technical Problem

The present disclosure is directed to providing a sealing tool inspection device that may quickly and easily check the state of sealing tools regardless of temperature and enable real-time management of the sealing tools while the sealing process is in progress, and a battery cell sealing system including the sealing tool inspection device.

### Technical Solution

In one aspect of the present disclosure, there is provided a sealing tool inspection device, which inspects a pair of sealing tools that contact a sealing target portion of a battery cell at opposite sides with the sealing target portion being interposed therebetween and seal the sealing target portion, the sealing tool inspection device comprising: a camera configured to photograph the pair of sealing tools in contact with the sealing target portion and generate an image showing a gap between the pair of sealing tools; and a processor configured to generate first information about at least one of a spacing between the pair of sealing tools and a posture of the pair of sealing tools, based on a spacing of the gap shown in the image.

In an embodiment, the camera may include a first camera configured to generate a first image showing a gap between one ends of the pair of sealing tools facing each other; and a second camera configured to generate a second image showing a gap between the other ends of the pair of sealing tools facing each other.

In an embodiment, the sealing tool inspection device may further comprise a position adjustment unit configured to adjust a position of the camera.

In an embodiment, the position adjustment unit may include a guide rail that guides the movement of the camera.

In an embodiment, the guide rail may include a first rail configured to guide the movement of the camera in a first axis direction; and a second rail configured to guide the movement of the camera in a second axis direction that intersects the first axis direction.

In an embodiment, the sealing tool inspection device may further comprise an extension structure provided on at least one end of a first sealing tool among the pair of sealing tools and extending outward from the first sealing tool; and a displacement sensor provided at a predetermined position and configured to sense a displacement value of the extension structure in a non-contact manner.

In an embodiment, the displacement sensor may be configured to irradiate a laser or light toward the extension structure and sense the displacement value of the extension structure using the laser or light reflected from the extension structure.

In an embodiment, the extension structure may include a coupling portion coupled to the first sealing tool; and a reflection portion configured to extend from the coupling portion to the outside of the first sealing tool and reflect the laser or light irradiated from the displacement sensor toward the displacement sensor.

In an embodiment, the processor may be configured to further generate second information about at least one of a position of the first sealing tool, the spacing between the pair of sealing tools, and the posture of the pair of sealing tools, based on the displacement value of the extension structure sensed by the displacement sensor.

In an embodiment, the processor may be further configured to determine whether a state of the pair of sealing tools is abnormal based on the first information and the second information, and the sealing tool inspection device 200 may further comprise an output device configured to output a warning signal when the state of the pair of sealing tools is determined to be abnormal.

In an embodiment, the extension structure may include a first extension structure provided at one end of the first sealing tool; and a second extension structure provided at the other end of the first sealing tool.

In an embodiment, the displacement sensor may include a first displacement sensor configured to sense a displacement value of the first extension structure at a first position; and a second displacement sensor configured to sense a displacement value of the second extension structure at a second position.

In an embodiment, the pair of sealing tools may be configured to seal the sealing target portion by transferring heat of a predetermined temperature or higher temperature to the sealing target portion, and the displacement sensor may be disposed below the pair of sealing tools so as not to encounter heat moving upward from the pair of sealing tools or the sealing target portion.

A battery cell sealing system according to another aspect of the present disclosure includes the sealing tool inspection device according to any one of the embodiments described above.

### Advantageous Effects

According to the present disclosure, since the state of the sealing tools that seal the sealing target portion of the battery cell case by pressurizing and heating is automatically inspected in a non-contact manner, it is possible to quickly and easily check the state of the sealing tools regardless of the temperature of the sealing tools, and it is possible to perform real-time management of the sealing tools while the sealing process is in progress. As a result, the defect rate of battery cells manufactured through the sealing process may be reduced, and rapid response is possible when defects occur.

In addition, by inspecting the state of the sealing tools using a camera and a displacement sensor that may be disposed at a position away from the sealing tools, the occurrence of errors due to heat may be minimized and the accuracy and reliability of the inspection results may be improved.

In addition, the accuracy and reliability of the inspection results may be further improved by determining whether the sealing tools are in an abnormal state based on the first information obtained through the camera and the second information obtained through the displacement sensor.

In addition, since information about both ends of the sealing tools in the longitudinal direction is obtained through a plurality of cameras and a plurality of displacement sensors, various information about the state of the sealing tools may be collected, and the accuracy and reliability of the inspection results may be further improved.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a block diagram showing a battery cell sealing system including a sealing tool inspection device according to an embodiment of the present disclosure.
FIG. 2 is a drawing showing the sealing tool inspection device according to an embodiment of the present disclosure.
FIG. 3 is a diagram showing an example of a battery cell that may be sealed by the battery cell sealing system according to the present disclosure.
FIG. 4 is a cross-sectional view showing a case portion of the battery cell shown in FIG. 3.
FIGS. 5 and 6 are diagrams showing a battery cell sealing system for sealing a battery cell.
FIG. 7 is a cross-sectional view showing a case portion of the battery cell corresponding to a sealing target.
FIG. 8 is a cross-sectional view showing a sealed state of the case shown in FIG. 7.
FIG. 9 is a diagram showing an area A1 shown in FIG. 6.
FIG. 10 is a diagram showing an area A2 shown in FIG. 6.
FIG. 11 is a drawing showing a position adjustment unit of the sealing tool inspection device according to an embodiment of the present disclosure.
FIG. 12 is a diagram showing a battery cell sealing system according to a modified embodiment.

### BEST MODE

Hereinafter, embodiments according to the present disclosure will be described in detail with reference to the accompanying drawings to clarify solutions for the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

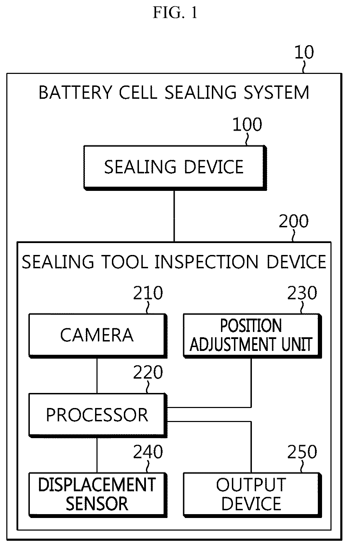

FIG. 1 is a block diagram showing a battery cell sealing system 10 including a sealing tool inspection device according to an embodiment of the present disclosure.

As shown in FIG. 1, the battery cell sealing system 10 according to an embodiment of the present disclosure may include a sealing device 100 and a sealing tool inspection device 200 according to the present disclosure.

The sealing device 100 is configured to seal a case forming the external body of a battery cell. As will be explained again below, the sealing device 100 may include a pair of sealing tools that contact a sealing target portion of the battery cell at opposite sides with the sealing target portion being interposed therebetween to seal the sealing target portion.

The sealing tool inspection device 200 according to the present disclosure includes a camera 210 and a processor 220.

The camera 210 is configured to photograph the pair of sealing tools in contact with the sealing target portion of the battery cell and generate an image showing a gap between the pair of sealing tools.

The processor 220 is configured to generate first information about at least one of the actual spacing between the pair of sealing tools and the posture of the pair of sealing tools, based on the spacing of the gap between the pair of sealing tools shown in the image photographed by the camera 210.

In an embodiment, the sealing tool inspection device 200 may optionally further include a position adjustment unit 230. In this case, the position adjustment unit 230 may be configured to adjust the position of the camera 210.

Also, in an embodiment, the sealing tool inspection device 200 may optionally further include a displacement sensor 240. In this case, the displacement sensor 240 may be configured to sense the position or displacement of the first sealing tool among the pair of sealing tools in a non-contact manner.

Also, in an embodiment, the sealing tool inspection device 200 may optionally further include an output device 250. In this case, the output device 250 may be configured to output a visual, auditory, or audiovisual warning signal when the processor 220 determines that the pair of sealing tools are in an abnormal state. To this end, the output device 250 may optionally include a display, printer, warning light, speaker, etc.

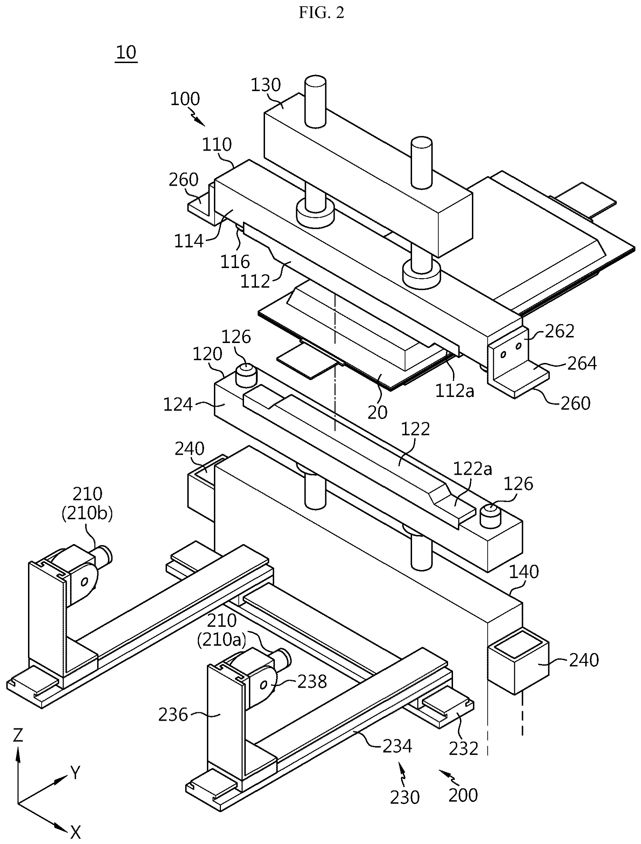

FIG. 2 is a drawing showing the sealing tool inspection device 200 according to an embodiment of the present disclosure.

As shown in FIG. 2, the sealing tool inspection device 200 according to an embodiment of the disclosure may be configured to interwork with the sealing device 100 of the battery cell sealing system 10 to automatically check the state of the pair of sealing tools 110, 120 provided in the corresponding sealing device 100.

In this case, the pair of sealing tools 110, 120 provided in the sealing device 100 may be configured to seal the sealing target portion by contacting the corresponding sealing target portion at opposite sides with the sealing target portion of the battery cell 20 (for example, the edge portion of the battery cell) interposed therebetween and pressurizing and/or heating the corresponding sealing target portion.

To this end, the sealing device 100 may include a first jig 130 and a second jig 140 that move the pair of sealing tools 110, 120. In FIG. 2, the first jig 130 may be configured to raise or lower the first sealing tool 110 positioned at an upper side among the pair of sealing tools 110, 120 depending on the situation. The second jig 140 may be configured to raise or lower the second sealing tool 120 positioned at a lower side among the pair of sealing tools 110, 120 depending on the situation. The first jig 130 and second jig 140 may be configured to move the pair of sealing tools 110, 120 in the upper and lower direction (Z-axis direction) using an actuator such as a servomotor or cylinder.

For example, when the battery cell 20 serving as a sealing target arrives at a predetermined position, the first jig 130 may lower the first sealing tool 110 to come into close contact with the upper surface of the sealing target portion of the battery cell 20, and the second jig 140 may raise the second sealing tool 120 to come into close contact with the lower surface of the sealing target portion of the battery cell 20. Then, the first sealing tool 110 and the second sealing tool 120 may pressurize and/or heat the sealing target portion of the battery cell 20 to seal the corresponding sealing target portion.

For this purpose, the first sealing tool 110 may include a first contact bar 112 in contact with the battery cell 20, a first support block 114 configured to support the first contact bar 112, and a first stopper 116 configured to determine the spacing between the first sealing tool 110 and the second sealing tool 120.

In addition, the second sealing tool 120 may include a second contact bar 122 in contact with the battery cell 20, a second support block 124 configured to support the second contact bar 122, and a second stopper 126 configured to determine the spacing between the first sealing tool 110 and the second sealing tool 120.

Also, the first sealing tool 110 and the second sealing tool 120 may include a heater (not shown) that heats the first contact bar 112 and the second contact bar 122.

In an embodiment, the sealing device 100 may include a shim disposed at an end of at least one of the first stopper 116 and the second stopper 126 to change the spacing between the first sealing tool 110 and the second sealing tool 120.

The sealing tool inspection device 200 according to the present disclosure may be configured to automatically inspect the states of the pair of sealing tools 110, 120 provided in the sealing device 100 described above.

To this end, the sealing tool inspection device 200 according to an embodiment of the present disclosure includes a camera 210 and a processor 220. Although not shown in FIG. 2, the processor 220 may be built in the camera 210 or may be included in a separate control unit (not shown) that controls the sealing tool inspection device 200.

The camera 210 is configured to photograph the pair of sealing tools 110, 120 in contact with the sealing target portion of the battery cell 20 and generate an image showing a gap between the pair of sealing tools 110, 120. In this case, the resolution of the camera 210 may be 1/10 of the spacing of the corresponding gap.

The processor 220 is configured to generate first information about at least one of the actual spacing between the pair of sealing tools 110, 120 and the posture of the pair of sealing tools 110, 120 based on the spacing of the gap between the pair of sealing tools 110, 120 shown in the image photographed by the camera 210. To this end, the processor 220 may store actual spacing values corresponding to the spacing of the gap shown in the image in an accessible recording medium in advance.

Also, the processor 220 may be configured to determine whether the state of the pair of sealing tools 110, 120 is abnormal using the first information. If the state of the pair of sealing tools 110, 120 is determined to be abnormal, the processor 220 may control the output device 250 described in relation to FIG. 1 to output a warning signal.

In an embodiment, the sealing tool inspection device 200 may include a position adjustment unit 230. The position adjustment unit 230 may be configured to adjust the position of the camera 210. To this end, the position adjustment unit 230 may include a guide rail that guides the movement of the camera 210.

In this case, the guide rail may include a first rail 232 that guides the movement of the camera 210 in a first axis direction (for example, X-axis direction) and a second rail 234 that guides the movement of the camera 210 in a second axis direction (for example, Y-axis direction) that intersects the first axis direction.

In an embodiment, the guide rail may include a third rail 236 that guides the movement of the camera 210 in a third axis direction (for example, Z-axis direction) that intersects the first axis direction and the second axis direction, respectively.

Also, in an embodiment, the position adjustment unit 230 may include a rotation frame 238 that supports the camera 210 and enables rotation of the corresponding camera 210 within a predetermined angle range.

In this way, by adjusting the position of the camera 210 through the position adjustment unit 230, the camera 210 may be accurately located at a position corresponding to the focal length of the camera 210, and the area photographed by the camera 210 may be easily changed.

In an embodiment, the sealing tool inspection device 200 may include a plurality of cameras 210. For example, the sealing tool inspection device 200 may include a first camera 210a that photographs one end of the pair of sealing tools 110, 120, and a second camera 210b that photographs the other end of the pair of sealing tools 110, 120, based on the longitudinal direction (X-axis direction) of the pair of sealing tools 110, 120.

In this case, the first camera 210a may be configured to generate a first image showing the gap between one ends of the pair of sealing tools 110, 120 facing each other, and the second camera 210b may be configured to produce a second image showing the gap between the one ends of the pair of sealing tools 110, 120.

In addition, the processor 220 may generate information about at least one of the actual spacing between the pair of sealing tools 110, 120 and the posture of the pair of sealing tools 110, 120 based on the spacing of the gap shown in the first image and the spacing of the gap shown in the second image.

In an embodiment, the sealing tool inspection device 200 may include a displacement sensor 240 instead of the camera 210, or may further include a displacement sensor 240 together with the camera 210.

Also, when the sealing tool inspection device 200 includes the displacement sensor 240, it may further include an extension structure 260.

The extension structure 260 may be provided on at least one end of the first sealing tool 110 among the pair of sealing tools 110, 120, and may be configured to extend to the outside of the first sealing tool 110.

The displacement sensor 240 may be provided at a predetermined position and configured to sense the displacement value of the extension structure 260, which moves together with the movement of the first sealing tool 110, in a non-contact manner.

For example, the displacement sensor 240 may be configured to irradiate a laser or light toward the extension structure 260 and sense the displacement value of the extension structure 260 using the laser or light reflected from the extension structure 260.

For this purpose, the extension structure 260 may include a coupling portion 262 coupled to the first sealing tool 110, and a reflection portion 264 that extends from the coupling portion 262 to the outside of the first sealing tool 110 to reflect the light or laser irradiated from the displacement sensor 240 back to the displacement sensor 240.

If the sealing tool inspection device 200 includes a displacement sensor 240 and an extension structure 260 in this way, the processor 220 may be configured to generate second information about at least one of the position of the first sealing tool 110, the spacing between the pair of sealing tools 110, 120 and the posture of the pair of sealing tools 110, 120, based on the displacement value of the extension structure sensed by the displacement sensor. To this end, the processor 220 may store in advance the position of the extension structure 260 or the distance to the extension structure 260 when the first sealing tool 110 is at a normal position in an accessible recording medium.

Also, the processor 220 may be configured to determine whether the state of the pair of sealing tools 110, 120 is abnormal using the second information. If the state of the pair of sealing tools 110, 120 is determined to be abnormal, the processor 220 may control the output device 250 described in relation to FIG. 1 to output a warning signal.

In an embodiment, when the sealing tool inspection device 200 includes the camera 210 and the displacement sensor 240 simultaneously, the processor 220 may be configured to determine whether the state of the pair of sealing tools 110, 120 is abnormal based on the first information obtained through the camera 210 and the second information obtained through the displacement sensor 240.

In this way, the sealing tool inspection device 200 may improve the accuracy and reliability of inspection results by performing multiple inspections on the states of the pair of sealing tools 110, 120 through the camera 210 and the displacement sensor 240.

In an embodiment, the sealing tool inspection device 200 may include a plurality of extension structures 260 and a plurality of displacement sensors 240, respectively. In this case, the extension structure 260 may include a first extension structure provided at one end of the first sealing tool 110, and a second extension structure provided at the other end of the first sealing tool 110, based on the longitudinal direction (X-axis direction) of the first sealing tool 110. Also, the displacement sensor 240 may include a first displacement sensor that senses the displacement value of the first extension structure at a first position, and a second displacement sensor that senses the displacement value of the second extension structure at a second position.

In this way, the sealing tool inspection device 200 may collect various information about the state of the sealing tools by obtaining information about both ends of the pair of sealing tools 110, 120 in the longitudinal direction, and may further improve the accuracy and reliability of the inspection results.

Meanwhile, as described above, the pair of sealing tools 110, 120 of the sealing device 100 may be configured to transfer heat of a predetermined temperature or higher temperature to the sealing target portion of the battery cell 20 to seal the corresponding sealing target portion. In this case, the displacement sensor 240 may be disposed below the pair of sealing tools 110, 120 so as not to encounter heat moving upward from the pair of sealing tools 110, 120 or the sealing target portion of the battery cell 20.

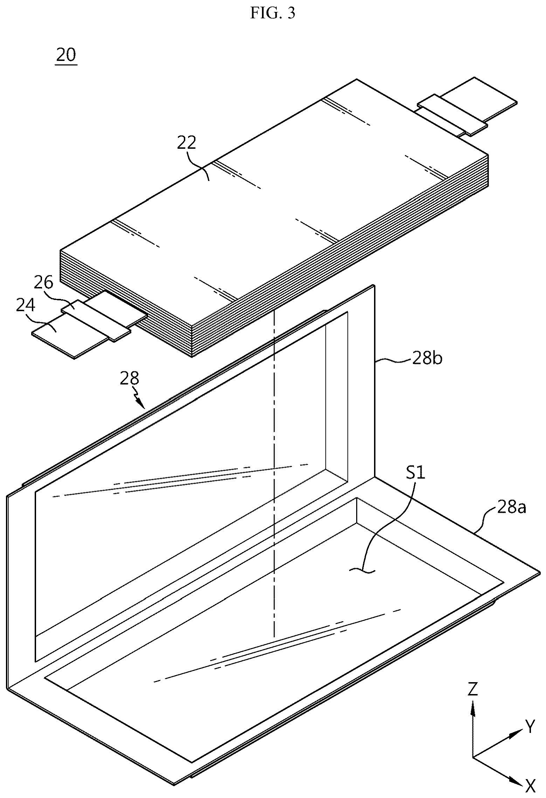

FIG. 3 is a diagram showing an example of a battery cell 20 that may be sealed by the battery cell sealing system according to the present disclosure.

As shown in FIG. 3, the battery cell 20 may include an electrode assembly 22 prepared by stacking a positive electrode plate and a negative electrode plate with a separator interposed therebetween, and a case 28 that accommodates the electrode assembly 22 together with an electrolyte material in the inner space S1.

Also, the battery cell 20 may further include an electrode lead 24 electrically connected to the electrode assembly 22, and a sealing tape 26 that seals the circumference of the electrode lead 24.

The case 28 of the battery cell 20 may include a first case portion 28a and a second case portion 28b that are coupled to each other to form the inner space S1. The case 28 may be sealed by hermetically coupling the edge portion of the first case portion 28a and the edge portion of the second case portion 28b in a state where the electrode assembly 22 is accommodated in the inner space S1.

In FIG. 3, the battery cell 20 is shown as a pouch-type or square-shaped battery cell, but depending on the embodiment, the battery cell 20 may be modified into various shapes that can be sealed by the pair of sealing tools 110, 120.

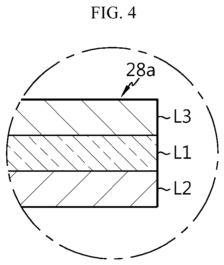

FIG. 4 is a cross-sectional view showing a case portion of the battery cell shown in FIG. 3.

As shown in FIG. 4, the case 28 of the battery cell 20 may have a multi-layer structure. For example, the first case portion 28a of the case 28 may include an aluminum sheet layer L1 that provides the rigidity required to protect the electrode assembly 22, an insulating material layer L2 laminated on the outer surface of the aluminum sheet layer L1 to insulate the aluminum sheet layer L1, and a coupling material layer L3 laminated on the inner surface of the aluminum sheet layer L2 and coupled to the second case portion 28b.

The insulating material layer L2 may include an insulating material such as PET (PolyEthylene Terephthalate) or nylon.

The coupling material layer L3 may include a heat-sealable material such as CPP (Casted PolyPropylene) or PP (PolyPropylene).

Meanwhile, the second case portion 28b of the case 28 may also have the same or similar multilayer structure as the first case portion 28a described above.

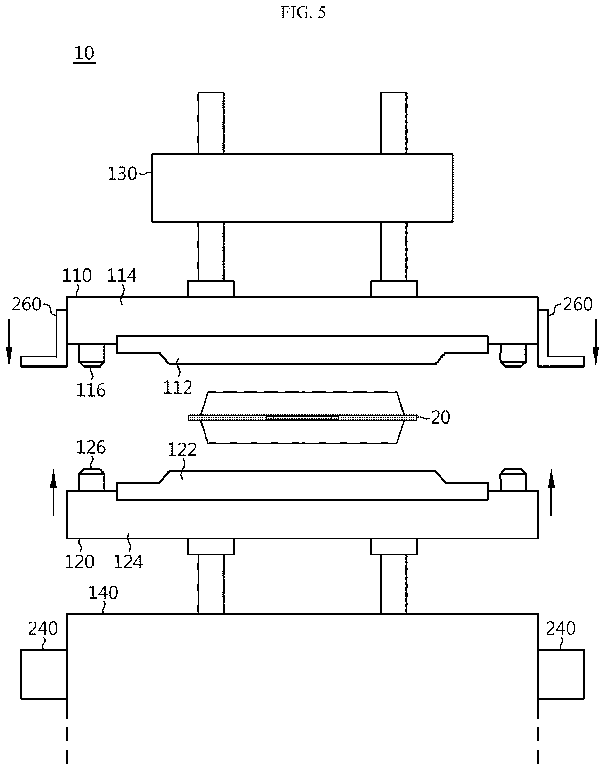

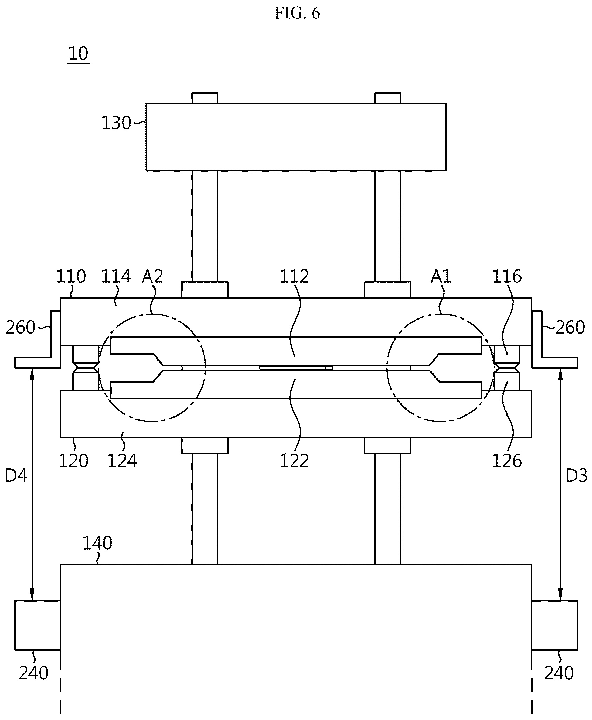

FIGS. 5 and 6 are diagrams showing a battery cell sealing system 10 for sealing a battery cell.

As shown in FIG. 5, the sealing device 100 of the battery cell sealing system 10 described above may include a first jig 130 and a second jig 140 that move the pair of sealing tools 110, 120.

The first jig 130 may be configured to raise or lower the first sealing tool 110 located at the upper side among the pair of sealing tools 110, 120 depending on the situation. Also, the second jig 140 may be configured to raise or lower the second sealing tool 120 located at the lower side among the pair of sealing tools 110, 120 depending on the situation. The first jig 130 and the second jig 140 may raise or lower the pair of sealing tools 110, 120 using an actuator such as a servomotor or cylinder.

For example, when the battery cell 20 serving as a sealing target arrives at a predetermined position, the first jig 130 lowers the first sealing tool 110 to come into close contact with the upper surface of the sealing target portion of the battery cell 20, and the second jig 140 raises the second sealing tool 120 to come into close contact with the lower surface of the sealing target portion of the battery cell 20.

Next, as shown in FIG. 6, the first sealing tool 110 and the second sealing tool 120 of the sealing device 100 may pressurize and/or heat the sealing target portion of the battery cell 20 to seal the corresponding sealing target portion.

In this case, the first contact bar 112 of the first sealing tool 110 is supported by the first support block 114 and may be in close contact with the upper surface of the sealing target portion. Also, the second contact bar 122 of the second sealing tool 120 is supported by the second support block 124 and may be in close contact with the lower surface of the sealing target portion. At this time, the spacing between the first sealing tool 110 and the second sealing tool 120 may be determined by the stoppers 116, 126.

Next, the first sealing tool 110 and the second sealing tool 120 may apply high temperature heat to the sealing target portion to thermally fuse the corresponding portion. As mentioned earlier, the first sealing tool 110 and the second sealing tool 120 may include a heater (not shown) that heats the first contact bar 112 and the second contact bar 122.

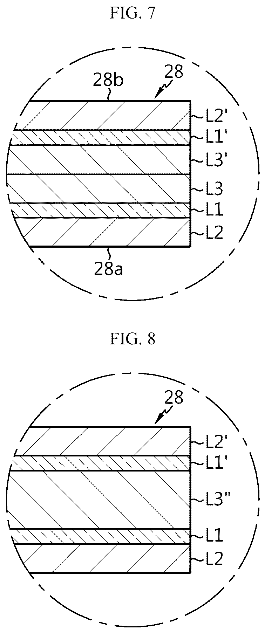

FIG. 7 is a cross-sectional view showing a case portion of the battery cell corresponding to a sealing target.

As shown in FIG. 7, the sealing target portion of the battery cell 20 is a portion where the edge portion of the first case portion 28a and the edge portion of the second case portion 28b face each other in the entire case 28.

The sealing target portion of the battery cell 20 may have a structure in which the insulating material layer L2, the aluminum sheet layer L1, and the coupling material layer L3 of the first case portion 28a, and the coupling material layer L3', the aluminum sheet layer L1', and the insulating material layer L2' of the second case portion 28b are stacked sequentially.

FIG. 8 is a cross-sectional view showing a sealed state of the case shown in FIG. 7.

As shown in FIG. 8, when the sealing target portion of the battery cell 20 is sealed by the pair of sealing tools 110, 120, the coupling material layer L3 of the first case portion 28a and the coupling material layer L3' of the second case portion 28b are thermally fused to form one layer L3".

Meanwhile, as described above, the sealing tool inspection device 200 according to the present disclosure may automatically inspect the states of the pair of sealing tools 110, 120 while the sealing device 100 performs a sealing process.

Specifically, the camera 210 of the sealing tool inspection device 200 may photograph the pair of sealing tools 110, 120 in contact with the sealing target portion of the battery cell 20 to generate an image showing a gap between the pair of sealing tools 110, 120.

If the sealing tool inspection device 200 includes a plurality of cameras, the plurality of cameras may be configured to photograph different parts of the pair of sealing tools 110, 120.

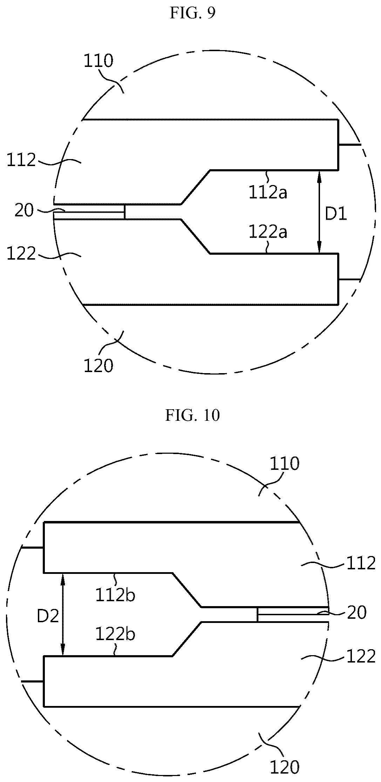

FIG. 9 is a diagram showing an area A1 shown in FIG. 6.

As shown in FIG. 9, the first camera 210a among the plurality of cameras may be configured to photograph one end of the pair of sealing tools 110, 120, for example ends adjacent to the degas-related part of the battery cell 20.

In this case, a step portion 112a may be provided at the first contact bar 112 of the first sealing tool 110 to expand the gap between the first sealing tool 110 and the second sealing tool 120 to facilitate measurement of the spacing D1 of the gap.

Also, a step portion 122a corresponding to the step portion 112a of the first contact bar 112 may be provided at the second contact bar 122 of the second sealing tool 120.

FIG. 10 is a diagram showing an area A2 shown in FIG. 6.

As shown in FIG. 10, the second camera 210b among the plurality of cameras may be configured to photograph the other ends of the pair of sealing tools 110, 120, for example ends portion adjacent to the portion of the battery cell 20 having no sealed edge.

In this case, a step portion 112b may be provided at the first contact bar 112 of the first sealing tool 110 to expand the gap between the first sealing tool 110 and the second sealing tool 120 to facilitate measurement of the spacing D2 of the gap.

Also, a step portion 122b corresponding to the step portion 112b of the first contact bar 112 may be provided at the second contact bar 122 of the second sealing tool 120.

In FIGS. 9 and 10, the step portions at both sides of the sealing tool are shown to have similar lengths, but the step portions adjacent to the degas-related portion of the battery cell 20 may be longer than the step portions at the opposite side.

Referring to FIG. 6 again, the sealing tool inspection device 200 may include a plurality of displacement sensors 240 and a plurality of extension structures 260, respectively. In this case, the extension structure 260 may be provided at both ends of the first sealing tool 110, respectively.

The displacement sensor 240 includes a first displacement sensor that senses the displacement value or distance (D3) of the first extension structure on one side at the first position, and a second displacement sensor that senses the displacement value or distance (D4) of the second extension structure on the other side at the second position.

In this way, the sealing tool inspection device 200 may collect various information about the state of the sealing tools by obtaining information about both ends of the pair of sealing tools 110, 120 in the longitudinal direction, and further improve the accuracy and reliability of the inspection results.

Also, the displacement sensor 240 may be disposed below the pair of sealing tools 110, 120 so as not to encounter heat moving upward from the pair of sealing tools 110, 120 or the sealing target portion of the battery cell 20.

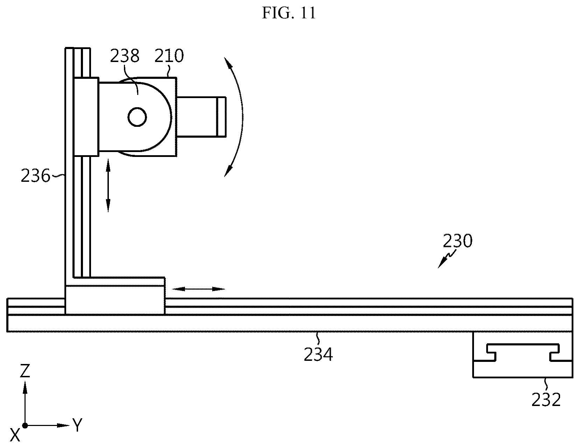

FIG. 11 is a drawing showing a position adjustment unit 230 of the sealing tool inspection device according to an embodiment of the present disclosure.

As shown in FIG. 11, the position adjustment unit 230 may be configured to adjust the position of the camera 210. To this end, the position adjustment unit 230 may include a guide rail that guides the movement of the camera 210.

In this case, the guide rail may include a first rail 232 that guides the movement of the camera 210 in a first axis direction (for example, X-axis direction) and a second rail 234 that guides the movement of the camera 210 in a second axis direction (for example, Y-axis direction) that intersects the first axis direction.

In an embodiment, the guide rail may further include a third rail 236 that guides the movement of the camera 210 in a third axis direction (for example, Z-axis direction) that intersects the first axis direction and the second axis direction, respectively.

Also, in an embodiment, the position adjustment unit 230 may include a rotation frame 238 that supports the camera 210 and enables rotation of the corresponding camera 210 within a predetermined angle range.

In an embodiment, when the sealing tool inspection device 200 includes a plurality of cameras, the position adjustment unit 230 may be configured to respectively adjust the positions of the plurality of cameras.

By adjusting the position of the camera 210 through the position adjustment unit 230 in this way, the camera 210 may be accurately located at a position corresponding to the focal length of the camera 210, and may easily change the area photographed by the camera 210.

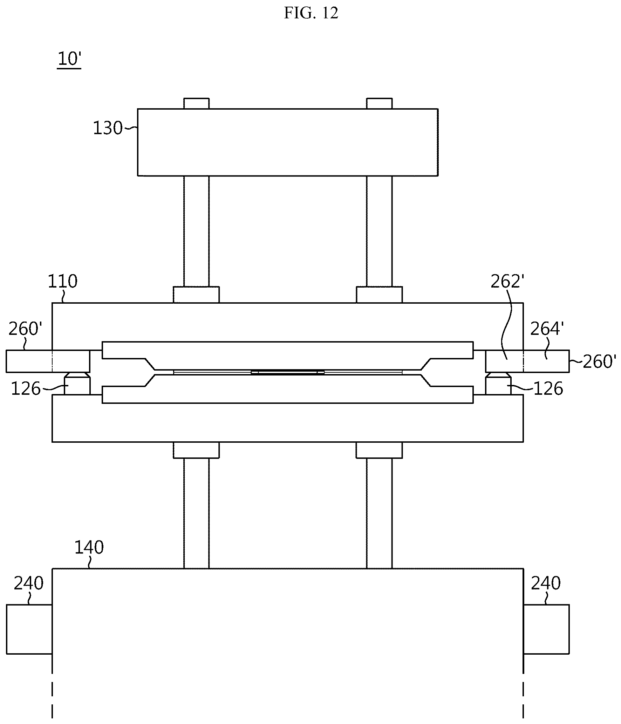

FIG. 12 is a diagram showing a battery cell sealing system 10' according to a modified embodiment.

As shown in FIG. 12, the battery cell sealing system 10' according to a modified embodiment may include a sealing device 100 and a sealing tool inspection device 200, similar to the battery cell sealing system 10 described above with reference to FIGS. 1 to 11.

It should be noted that the sealing tool inspection device 200 of the battery cell sealing system 10' includes an extension structure 260' integrated with the stopper of the sealing device 100.

That is, the extension structure 260' may include a coupling portion 262' coupled to the first sealing tool 110, and a reflection portion 264' that extends from the coupling portion 262' to the outside of the first sealing tool 110 so that the light or laser irradiated from the displacement sensor 240 is reflected back toward the displacement sensor 240.

In this case, the coupling portion 262' of the extension structure 260' may serve as a stopper to limit the spacing between the first sealing tool 110 and the second sealing tool 120.

As described above, according to the present disclosure, since the state of the sealing tools that seal the sealing target portion of the battery cell case by pressurizing and heating is automatically inspected in a non-contact manner, it is possible to quickly and easily check the state of the sealing tools regardless of the temperature of the sealing tools, and it is possible to perform real-time management of the sealing tools while the sealing process is in progress. As a result, the defect rate of battery cells manufactured through the sealing process may be reduced, and rapid response is possible when defects occur.

In addition, by inspecting the state of the sealing tools using a camera and a displacement sensor that may be disposed at a position away from the sealing tools, the occurrence of errors due to heat may be minimized and the accuracy and reliability of the inspection results may be improved.

In addition, the accuracy and reliability of the inspection results may be further improved by determining whether the sealing tools are in an abnormal state based on the first information obtained through the camera and the second information obtained through the displacement sensor.

In addition, since information about both ends of the sealing tools in the longitudinal direction is obtained through a plurality of cameras and a plurality of displacement sensors, various information about the state of the sealing tools may be collected, and the accuracy and reliability of the inspection results may be further improved.

Furthermore, the embodiments according to the present disclosure may also solve various other technical problems other than those mentioned in this specification in the related technical fields, as well as the relevant technical field.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

### Explanation of Reference Signs

10, 10': battery cell sealing system
100: sealing device
110: first sealing tool
120: second sealing tool
130: first jig
140: second jig
200: sealing tool inspection device
210: camera
220: processor
230: position adjustment unit
240: displacement sensor
250: output device

## Claims

1. A sealing tool inspection device, which inspects a pair of sealing tools that contact a sealing target portion of a battery cell at opposite sides with the sealing target portion being interposed therebetween and seal the sealing target portion, the sealing tool inspection device comprising:
a camera configured to photograph the pair of sealing tools in contact with the sealing target portion and generate an image showing a gap between the pair of sealing tools; and
a processor configured to generate first information about at least one of a spacing between the pair of sealing tools and a posture of the pair of sealing tools, based on a spacing of the gap shown in the image.

2. The sealing tool inspection device according to claim 1,
wherein the camera includes:
a first camera configured to generate a first image showing a gap between one ends of the pair of sealing tools facing each other; and
a second camera configured to generate a second image showing a gap between the other ends of the pair of sealing tools facing each other.

3. The sealing tool inspection device according to claim 1, further comprising:
a position adjustment unit configured to adjust a position of the camera.

4. The sealing tool inspection device according to claim 3,
wherein the position adjustment unit includes a guide rail that guides the movement of the camera.

5. The sealing tool inspection device according to claim 4,
wherein the guide rail includes:
a first rail configured to guide the movement of the camera in a first axis direction; and
a second rail configured to guide the movement of the camera in a second axis direction that intersects the first axis direction.

6. The sealing tool inspection device according to claim 1, further comprising:
an extension structure provided on at least one end of a first sealing tool among the pair of sealing tools and extending outward from the first sealing tool; and
a displacement sensor provided at a predetermined position and configured to sense a displacement value of the extension structure in a non-contact manner.

7. The sealing tool inspection device according to claim 6,
wherein the displacement sensor is configured to irradiate a laser or light toward the extension structure and sense the displacement value of the extension structure using the laser or light reflected from the extension structure.

8. The sealing tool inspection device according to claim 7, wherein the extension structure includes:
a coupling portion coupled to the first sealing tool; and
a reflection portion configured to extend from the coupling portion to the outside of the first sealing tool and reflect the laser or light irradiated from the displacement sensor toward the displacement sensor.

9. The sealing tool inspection device according to claim 6,
wherein the processor is configured to further generate second information about at least one of a position of the first sealing tool, the spacing between the pair of sealing tools, and the posture of the pair of sealing tools, based on the displacement value of the extension structure sensed by the displacement sensor.

10. The sealing tool inspection device according to claim 9,
wherein the processor is further configured to determine whether a state of the pair of sealing tools is abnormal based on the first information and the second information, and
wherein the sealing tool inspection device further comprises an output device configured to output a warning signal when the state of the pair of sealing tools is determined to be abnormal.

11. The sealing tool inspection device according to claim 6,
wherein the extension structure includes:
a first extension structure provided at one end of the first sealing tool; and
a second extension structure provided at the other end of the first sealing tool.

12. The sealing tool inspection device according to claim 11,
wherein the displacement sensor includes:
a first displacement sensor configured to sense a displacement value of the first extension structure at a first position; and
a second displacement sensor configured to sense a displacement value of the second extension structure at a second position.

13. The sealing tool inspection device according to claim 6,
wherein the pair of sealing tools are configured to seal the sealing target portion by transferring heat of a predetermined temperature or higher temperature to the sealing target portion, and
wherein the displacement sensor is disposed below the pair of sealing tools so as not to encounter heat moving upward from the pair of sealing tools or the sealing target portion.

14. A battery cell sealing system, comprising the sealing tool inspection device according to any one of claims 1 to 13.
